# EUROPEAN PATENT APPLICATION

(11) **EP 3 447 079 A1**
(43) Date of publication of application: **27.02.2019**
(21) Application number: 16849919.2
(22) Date of filing: 24.08.2016
(51) Int. Cl.: C08G 63/183, C08G 63/80, C08J 3/22, C08K 3/00, D01F 6/62, B60N 3/04

(54) **POLYETHYLENE TEREPHTHALATE POLYMER, YARN COMPRISING SAME, AND METHOD FOR MANUFACTURING CAR MAT**

(30) Priority: 19.04.2016 KR 20160047629
(71) Applicant: HYOSUNG ADVANCED MATERIALS CORPORATION, Seoul, 04144 (KR)
(72) Inventor: KIM, Chon Ki, Incheon 21350 (KR); KIM, Moo Song, Anyang-si Gyeonggi-do 14070 (KR); KIM, Jong Min, Hwaseong-si Gyeonggi-do 18552 (KR); KWON, Yong Chul, Gunpo-si Gyeonggi-do 15880 (KR)
(74) Representative: v. Bezold & Partner Patentanwälte - PartG mbB
(86) International application number: PCT/KR2016/009366
(87) International publication number: WO 2017/183771

(57) **Abstract**

The present invention relates to a method for producing a polyethylene terephthalate polymer having improved abrasion resistance by introducing an inorganic particle (metal) in addition to ethylene glycol (EG, Ethyleneglycol) and terephthalic acid (TPA, terephthalic acid) forming a conventional polyethylene terephthalate bond, and a yarn and a car mat produced by using the polyethylene terephthalate polymer produced by the above-mentioned production method.

When the yarn and the car mat are produced by using the above-mentioned polyethylene terephthalate polymer, the density of the yarn is improved and the abrasion resistance of the car mat can be improved.

## Description

### Technical Field

The present invention relates to a method for producing a polyethylene terephthalate polymer improved in abrasion resistance by introducing an inorganic particle (metal) in addition to ethylene glycol (EG, Ethyleneglycol) and terephthalic acid (TPA, terephthalic acid) comprising a conventional polyethylene terephthalate bond, and a yarn and a car mat produced by using the polyethylene terephthalate polymer produced by the above-mentioned manufacturing method.

### Background Art

Generally, a polyester resin, particularly polyethylene terephthalate resin, is a linear polymer synthesized from dicarboxylic acids or ester-forming derivatives thereof and diols or ester-forming derivatives thereof, and is widely used for various productions such as containers, films and fibers and etc. because it is low in cost, excellent in mechanical properties and chemical properties as well as excellent in gas barrier properties. Meanwhile, polyester is produced by a condensation polymerization method. In the equilibrium reaction according to external conditions, a viscosity which can be used commercially is obtained in conditions of high temperature and high vacuum, and a certain amount of oligomer is remained in the final polymer.

Meanwhile, the car mat market is largely composed of market comprising PET Needle Punch and Nylon BCF until now. In the case of conventional PET car mats, the price is low compared to Nylon car mats, but it has been used only in small cars due to the low abrasion resistance required for car mats (300 times level).

In order to expand the market of PET car mat, we have developed the present invention in order to develop abrasion resistance of Nylon level in PET car mat, and succeeded in commercialization by achieving 1000 or more times of abrasion resistance of Nylon level.

### Disclosure

### Technical Problem

The present invention is to directed to providing a polyethylene terephthalate polymer improved in abrasion resistance by additionally introducing inorganic particles in production of a polyethylene terephthalate polymer, and a method for producing a yarn and a car mat using the same.

### Technical Solution

According to an exemplary embodiment of the present invention, a method for preparing polyethylene terephthalate polymer may include a step of producing a slurry by mixing ethylene glycol (EG, Ethyleneglycol) and terephthalic acid (TPA, Terephthalic acid); a step of esterifying the slurry; and a step of polycondensating the slurry, wherein after or before the esterifying step or before the polycondensating step, a master batch including inorganic particles is added.

The inorganic particles are preferably at least one selected from the group comprising barium sulfate, silica, kaolin, aluminum oxide (Al₂O₃), TiO₂, calcium carbonate (CaCO₃, mica, zeolite, talc, glass bead powder and calcium phosphate.

Also, the inorganic particles are preferably added in an amount of 0.01 to 5 weight%.

In this case, barium sulfate content is less than 0.01 weight%, the abrasion resistance is declined. If the barium sulfate content is more than 5 weight%, the mechanical properties are declined.

In addition, the inorganic particles are preferably having an average particle diameter of 0.1 to 10 *µ*m. In this case, if the average particle diameter is less than 0.1 *µ*m, the dispersibility is declined because of condensation of fine particles, and the abrasion resistance is lowered. If the average particle diameter is more than 10 *µ*m, the mechanical properties are declined.

In addition, the intrinsic viscosity (I.V.) of the polyethylene terephthalate polymer is preferably 0.8 or more.

In addition, the present invention provides a polyethylene terephthalate yarn, which is produced using the polyethylene terephthalate polymer produced by the manufacturing method, and having a yarn denier of 800 to 1500 d or less, and preferably 850 to 1350 d.

Also, the present invention provides a car mat comprising the polyethylene terephthalate yarn.

### Advantageous Effects

The present invention can improve the abrasion resistance of a car mat by improving the density of a yarn by adding inorganic particles when producing a polyethylene terephthalate polymer in the case of manufacturing a yarn and a car mat using the polyethylene terephthalate polymer.

### Detailed Description of the Preferred Embodiments

A manufacturing method of a polyethylene terephthalate polymer according to the present invention is characterized by comprising a step of producing a slurry by mixing ethylene glycol (EG, Ethyleneglycol) and terephthalic acid (TPA, Terephthalic acid); a step of esterifying the slurry; and a step of polycondensating the slurry, wherein after or before the esterifying or before the polycondensating, a master batch comprising inorganic particles is added.

In the present invention, the inorganic particles are inserted after the esterification reaction and before the polycondensation step in order to realize the abrasion resistance improvement effect of polyethylene terephthalate and to condensate and disperse the inorganic particles in the polyethylene terephthalate polymer.

Here, the inorganic particles are preferably one or more selected from the group comprising barium sulfate, silica, kaolin, aluminum oxide (Al₂O₃), TiO₂, calcium carbonate (CaCO₃), mica, zeolite, talc, glass bead powder and calcium phosphate, but it is not limited thereto.

According to the present invention, barium sulfate and silica are more preferably used for inorganic particles. The reason why barium sulfate and silica are used for inorganic particles is that they have higher hardness and refractive index is similar to that of polyethylene terephthalate, and when barium sulfate is added as inorganic particles, the gloss change of a yarn can be minimized.

The present invention inserts a master batch comprising inorganic particles after esterifying or before polycondensating. In this case, the average particle diameter (D50) of inserted inorganic particles is preferably 0.1 to 10 *µ*m, and more preferably 1.0 to 5.0 *µ*m. If the average particle diameter of inorganic particles is less than 0.1 *µ*m, improvement effect in the abrasion resistance is low because it is difficult to secure dispersibility because of condensation between fine particles, and if the average particle diameter is more than 10 *µ*m, there is a problem in spinnability, and productivity is declined. Also, the problems in spinnability decline and pressure increase according to condensation of fine particles are mainly because of particle size, shape, surface area, charge, and chemical properties, and among them, dispersion of particle size directly affects dispersibility.

In this case, the present invention comprises two or more different kinds of particle sizes of the inorganic particles to improve abrasion resistance. In the case of using particles of relatively different size compared to the case of using particles of the same size, as fine protrusions are formed on a polymer and surface of a yarn by large particles, the abrasion resistance can be additionally improved.

In the case of distribution below the average particle diameter is less than 50 %, condensation occurs very rapidly because of the molecular force between molecules, thereby largely decreasing spinnability. Therefore, according to the present invention, barium sulfate particles having an average particle diameter distribution of 50% or more are used to prevent condensation.

Also, amount of inorganic particles added is preferably 0.01 to 5 weight% compared to the total weight of the polyethylene terephthalate polymer, and more preferably 0.1 to 1.5 weight%.

In the case of content of inorganic particles is less than 0.01 weight%, improvement effect of the abrasion resistance is slight. If the content is more than 5 weight%, improvement in functionality is not large and spinnability and properties are declined.

The intrinsic viscosity(I.V.) of the polyethylene terephthalate polymer produced as described above is preferably 0.8 or more.

In the case of producing a yarn by using a polyethylene terephthalate polymer having an intrinsic viscosity of 0.8 or more, the denier of a yarn is preferably 800 to 1500 d, and more preferably 850 to 1350 d.

In the case of the denier of a yarn is in the range stated above, a car mat improved in abrasion resistance can be produced using the yarn.

Hereinafter, a method for producing a yarn using the polyethylene terephthalate polymer produced according to the present invention is described in detail.

First, a polyethylene terephthalate polymer produced according to the present invention is melt-spun at 245 to 335 °C and passed through a spinneret.

A polyethylene terephthalate resin that is basis of the present invention contains 90 mol% or more of repeating unit of ethylene terephthalate.

Then, it is cooled in cooling zone at speed of 0.2 to 1.0 m/sec. In this case, cooling temperature is adjusted to 10 to 35°C. If speed of cooling air is less than 0.2 m/sec, cooling effect is not enough. If speed of cooling air is more than 1.0 m/sec, there is a lot of shaking of a yarn, thereby causes problem in spinning workability. If cooling temperature is less than 10°C, it is economically disadvantageous, and if it is more than 35°C, cooling effect declines.

The present invention goes through a step of spin finish in which oiling after cooling. In a finish applicator, oil is firstly and secondarily lubricated using a neat type emulsion or a water-soluble emulsion in two steps, thereby increasing the collecting ability, lubricity and smoothness of a yarn.

Then a filament is provided to a drawing roller at a speed of 100 to 1,000 m/min, and preferably 400 to 800 m/min from a feed roller, wherein the drawing roller has temperature of 100 to 230°C and a feed roller speed of 2.5 to 6.0 times, and preferably 3.5 to 5.0 times. If the drawing speed is less than 2.5 times, drawing is not performed sufficiently. If the drawing speed is more than 6.0 times, the polyethylene terephthalate filament cannot withstand drawing and be folded because of feature of polyethylene terephthalate material.

The filament passed through a drawing roller goes through a texturing unit having a texturing nozzle to give bulkiness, wherein by jetting heated fluid at 150 to 270°C is sprayed in pressure of 3 to 10 kg/cm² inside the texturing unit, and the filament is crimped in irregular three-dimension, and wherein crimp ratio is 3 to 50 %.

In this case, temperature of the heated fluid is preferably 150 to 270°C. If the temperature is lower than 150°C, texturing effect declines. If the temperature is higher than 270°C, a filament is damaged. Moreover, pressure of the heated fluid is preferably 3 to 10 kg/cm², and if it is less than 3 kg/cm², texturing effect declines. If it is more than 10 kg/cm², the filament is damaged.

The filament passed through the texturing unit goes through a cooling section and it is cooled and goes through an interlacing device. In this part, a slight twisting and knotting are given in pressure of 2.0 to 8.0 kg/m² in order to improve the collecting ability of a yarn, and given in range of 0 to 40 times/m, and preferably 10 to 25 times. In the case of interlacing more than 40 times, even after dyeing and post-processing, the interlaced portion is not unknotted, and damages the exterior of a carpet.

Then, it is passed from a relax roller at a speed of 0.65 to 0.95 times of a speed of a drawing roller to give a relaxation rate of 5 to 35 %, and then winding in a final winding device. Speed of the winding device is generally adjusted to make tension of a yarn is in the range of 50 to 350 g. In this case, if tension in the winding device is less than 50 g, winding cannot be performed. If the tension is more than 350 g, the bulkiness declines and largely causing shrinkage of a yarn, and causing high tension and problem in work. Also, if speed of a relax roller is less than 0.65 times of speed of a drawing roller, winding does not occur. If the speed is more than 0.95 times, the bulkiness declines and largely causing shrinkage of a yarn, and causing high tension and problem in work.

The method stated above relates to a BCF produced only by a polyethylene terephthalate resin, and the process by step is the same as that described above when manufacturing a dope dyed yarn according to usage of a carpet. Moreover, it is possible to manufacture a dope dyed yarn by inserting and spinning a certain amount of coloring agent into a base chip input supplying raw materials.

As described above, the polyethylene terephthalate multifilament prepared according to the present invention goes through post-processing and produced as a carpet. Carpets made from BCF yarns of the present invention can be produced in any method known to people skilled in the art. Preferably, a plurality of BCF yarns are cabled together and heat set, then weaving with a primary backing. Then applying latex adhesive and secondary backsheet. A cut pile style carpet or a loop pile style carpet having a pile height of approximately 2 to 20 mm can be manufactured.

Hereinafter, the present invention is described in more detail with reference to the following examples. However, the following examples are illustrative of the present invention and are not to be construed as limiting the scope of the present invention. The properties of yarns prepared in Examples and Comparative Examples of the present invention were evaluated in the following manner.

### 1. How to measure the strength and elongation of a yarn

A yarn in a standard state condition, that is, in a steady temperature and humidity room at temperature of 25°C and relative humidity of 65 % RH for 24 hours, and then a sample is measured by a tensile tester by ASTM 2256 method.

### 2. Crimp rate and standard deviation

Crip rate and standard deviation are measured by TYT-EW (Textured Yarn Tester) measuring instrument, measured length is 20 m, and measured 5 times at intervals in 2 m. Temperature of heating zone is 130°C and measured speed is 20 m/min.

### 3. Abrasion resistance evaluation method of a car mat

Abrasion resistance of a car mat is measured under the following conditions, and number of abrasion resistance of the car mat is evaluated based on the final number of abrasions at the time of exposure of the car mat bottom in level corresponding to the exterior evaluation level 2.5.
Related test method Specification: ASTM D3884
Test method: Hyundai Motor MS300-35
Test equipment: Taber abrasion tester
Sample size: 130mm in diameter Circular sample

### Test conditions

1) Abrasive wheel: H-18
2) Rotation speed: 70 times/min
3) Load: 1000 g
4) Evaluation method: Exterior evaluation 1st to 5th grade (Passed grade 3 or higher (3,4,5 grade) of MS343-15 of Hyundai Motor Company)
5) Evaluation criteria:
   Grade 5 abrasion is not shown at all
   Grade 4 abrasion is slightly visible or almost invisible.
   Grade 3 abrasion slightly exists but visible
   Grade 2 abrasion is slightly severe
   Grade 1 much severe

### Example 1

A slurry prepared by mixing 50 parts by weight of ethylene glycol compared to 100 parts by weight of terephthalic acid was inserted into an esterification reactor and by pressing at 250°C for 4 hours under pressure of 0.5 torr to flow water to out of the reactor to, preceded esterification reaction, and produced bis(2-hydroxyethyl) terephthalate. In this case, 300 ppm of a phosphorus-based heat stabilizer was added at the end of the esterification reaction. Also, after the esterification reaction, 90% of barium sulfate particles having an average particle diameter of 1.4 *µ*m and 10 % of barium sulfate particles having a particle diameter of 4.2 *µ*m were added in an amount of 0.1 weight% in the polymer. Thereafter, 300 ppm of an antimony catalyst was added as a polymerization catalyst at the initial stage of polycondensation reaction, the temperature was increased from 250°C to 285°C at 60°C/hr, and the pressure was reduced to 0.5 torr and proceed the polycondensation reaction.

Through a spinneret having 128 holes and Y-shaped cross-section, the polyethylene terephthalate polymer is melt-spun at 290°C. A polymer getting out the spinneret is cooled by cooling air at 0.5 m/s and 20°C in the bottom of a nozzle, and then passed through an emulsion supply device. A yarn given emulsion went through a feed roller maintained at a temperature of 90°C at a speed of 598 m/min and then stretched at a rate of 2,840 m/min at 190°C in a drawing roller. The yarn passed through the drawing roller went through a texturing nozzle and the yarn is given a crimp. In this case, temperature of hot air is 200°C, the pressure is 7 kg/cm², and the back pressure is 5 kg/cm². After in a collector cooled by cooling water, interlacing was conducted under the pressure of 4.0 kg/m² in a ratio of 20 times/m. The yarn went through a relax roller at 2250 m/min, relaxed by about 21 %, and wound in a winding machine. The denier, strength and crimp value of the polyethylene terephthalate BCF yarn produced by this process were measured and are shown in Table 1.

The polyethylene terephthalate BCF yarn was used to produce a car mat, and its abrasion resistance was measured. The results are shown in Table 1.

### Example 2 to 4

Polymers, yarns and car mats were prepared in the same method as in Example 1, except that the intrinsic viscosity of the polyethylene terephthalate polymer and the denier of the yarn were changed as shown in Table 1.

### Example 5

Except that the intrinsic viscosity of the polyethylene terephthalate polymer and the denier of the yarn were changed as shown in Table 1 and 0.1 weight% of 90 % of silica particles having an average particle diameter of 1.4 *µ*m and 10 % of silica particles having an average particle diameter of 4.2 *µ*m were inserted instead of barium sulfate in the production of the polyethylene terephthalate polymer, polymers, yarns and car mats were prepared in the same method as in Example 1.

### Example 6

Polymers, yarns and car mats were prepared in the same method as in Example 5, except that the denier of the polyethylene terephthalate yarn was changed as shown in Table 1.

### Example 7 to 10

Polymers, yarns and car mats were prepared in the same method as in Example 1, except that the intrinsic viscosity of the polyethylene terephthalate polymer, the denier of the yarn and the barium sulfate content were changed as shown in Table 1.

### Comparative Example 1

Polymers, yarns and car mats were prepared in the same method as in Example 1, except that the barium sulfate was not added during the production of the polyethylene terephthalate polymer, and the viscosity of the polymer and the denier of the yarn were changed as shown in Table 1.

### Comparative Example 2

Polymers, yarns and car mats were prepared in the same method as in Example 1, except that the intrinsic viscosity of the polyethylene terephthalate polymer and the denier of the yarn were changed as shown in Table 1.

### Comparative Example 3

Polymers, yarns and car mats were prepared in the same method as in Comparative Example 1, except that the intrinsic viscosity of the polyethylene terephthalate polymer and the denier of the yarn were changed as shown in Table 1.

**Table 1**

| | Comparative Example 1 | Comparative Example 2 | Comparative Example 3 | Example 1 | 2 | 3 | 4 | 5 | 6 | 7 | 8 | 9 | 10 |
|---|---|---|---|---|---|---|---|---|---|---|---|---|---|
| Polymer intrinsic viscosity | 0.64 | 0.76 | 0.93 | 1,10 | 0.80 | 0.93 | 1.05 | 1.05 | 1.05 | 0.93 | 0.80 | 0.80 | 0.80 |
| Denier | 1299 | 1299 | 1304 | 851 | 917 | 954 | 978 | 987 | 1265 | 1115 | 1209 | 1321 | 1347 |
| Inorganic particle (weight%) | X | Barium sulfate 0.1 | X | Barium sulfate 0.1 | Barium sulfate 0.1 | Barium sulfate 0.1 | Barium sulfate 0.1 | Silica 0.1 | Silica 0.1 | Barium sulfate 1.0 | Barium sulfate 1.0 | Barium sulfate 0.1 | Barium sulfate 0.01 |
| Abrasion Resistance (car mat) | 300 | 450 | 450 | 1200 | 900 | 1000 | 1000 | 1100 | 850 | 900 | 800 | 700 | 550 |

As shown in Table 1, barium sulfate or silica was inserted after the esterification reaction and in the case of the intrinsic viscosity of the polymer was 0.8 or more and the denier of the yarn was 850 to 1,350 denier, the produced car mats (Examples 1 to 10) were improved in the abrasion resistance.

Meanwhile, it was found that when the inorganic particles were not inserted (Comparative Example 3) in the production of the polymer, the abrasion resistance of the produced car mat was declined. It was also found that when the polymer had the intrinsic viscosity of less than 0.8 (Comparative Example 1) without adding inorganic particles during the production of the polymer, the abrasion resistance of the car mat was declined. Meanwhile, it was found that the inorganic particles were inserted in the preparation of the polymer, but the abrasion resistance of the car mats was also decreased when the intrinsic viscosity of the polymer was less than 0.8 (Comparative Example 2).

While this invention has been described in connection with what is presently considered to be practical exemplary embodiments, it is to be understood that the invention is not limited to the disclosed embodiments, on the contrary, is intended to cover various modifications and equivalent arrangements included within the spirit and scope of the appended claims.

## Claims

1. A method for preparing a polyethylene terephthalate polymer, **characterized by** comprising the steps of:
preparing a slurry by mixing ethylene glycol (EG, Ethyleneglycol) and terephthalic acid (TPA, Terephthalic acid);
esterifying the slurry; and
polycondensating the slurry,
wherein after or before the esterifying or before the polycondensating, a master batch including inorganic particles or an inorganic particle is inserted.

2. The method for preparing the polyethylene terephthalate polymer according to claim 1,
wherein the inorganic particles are at least one selected from the group comprising barium sulfate, silica, kaolin, aluminum oxide (Al₂O₃), TiO₂, calcium carbonate (CaCO₃), mica, zeolite, talc, glass beads powder and calcium phosphate.

3. The method for preparing the polyethylene terephthalate polymer according to claim 1,
wherein the inorganic particles are added in an amount of 0.01 to 5 weight%.

4. The method for preparing the polyethylene terephthalate polymer according to claim 1,
wherein the inorganic particle has an average particle diameter of 0.1 to 10 *µ*m.

5. The method for preparing the polyethylene terephthalate polymer according to claim 1,
wherein the polyethylene terephthalate polymer has an intrinsic viscosity (IV) of 0.8 or more.

6. A polyethylene terephthalate polymer produced by the method according to any one of claims 1 to 5.

7. A polyethylene terephthalate yarn produced by the polyethylene terephthalate polymer according to claim 6,
wherein the denier of the yarn is 800 to 1,500 denier.

8. A car mat comprising the polyethylene terephthalate yarn according to claim 7.
